# EUROPEAN PATENT SPECIFICATION

(11) **EP 2 893 438 B1**
(45) Date of publication and mention of the grant of the patent: **19.05.2021**
(21) Application number: 13835033.5
(22) Date of filing: 06.09.2013
(51) Int. Cl.: G06F 40/169

(54) **METHOD AND TERMINAL FOR EDITING INFORMATION IN SOCIAL NETWORK SERVICE APPLICATIONS**
VERFAHREN UND ENDGERÄT ZUM BEARBEITEN VON INFORMATIONEN IN SERVICEANWENDUNGEN FÜR SOZIALE NETZWERKE
PROCÉDÉ ET TERMINAL PERMETTANT DE MODIFIER DES INFORMATIONS DANS DES APPLICATIONS DE SERVICE DE RÉSEAU SOCIAL

(30) Priority: 07.09.2012 CN 201210329911
(43) Date of publication of application: 15.07.2015
(73) Proprietor: Tencent Technology (Shenzhen) Company Limited, Shenzhen, Guangdong 518000 (CN)
(72) Inventor: NING, Chenggong, Shenzhen Guangdong 518000 (CN); HUANG, Xiaojun, Shenzhen Guangdong 518000 (CN); JI, Mingzhong, Shenzhen Guangdong 518000 (CN); WANG, Minghui, Shenzhen Guangdong 518000 (CN); HUANG, Xueke, Shenzhen Guangdong 518000 (CN); LIANG, Zhu, Shenzhen Guangdong 518000 (CN); ZHENG, Zhihao, Shenzhen Guangdong 518000 (CN); WANG, Huixing, Shenzhen Guangdong 518000 (CN); XU, Huabin, Shenzhen Guangdong 518000 (CN); WEN, Guanghai, Shenzhen Guangdong 518000 (CN); WU, Zhihua, Shenzhen Guangdong 518000 (CN)
(74) Representative: Eisenführ Speiser
(86) International application number: PCT/CN2013/083046
(87) International publication number: WO 2014/036961

(56) References cited:
- WO-A1-2010/007612
- WO-A2-01/47248
- CN-A- 1 389 034
- CN-A- 1 816 090
- CN-A- 101 577 877
- CN-A- 102 368 764
- CN-A- 102 841 792
- RU-U1- 90 230
- US-A1- 2008 151 058
- US-A1- 2009 144 377
- US-A1- 2010 107 080
- US-A1- 2011 085 046
- US-A1- 2012 005 287
- US-A1- 2012 110 432
- US-A1- 2012 136 943

## Description

### TECHNICAL FIELD

The present disclosure relates generally to the technological field of the Internet, specifically to the technological filed of social network service ("SNS"), and more particularly to method and terminal for editing information in SNS applications.

### BACKGROUND

With the development of terminal technologies, SNS applications have been widely developed. End users can use SNS applications to edit information, e.g., to write weblogs and comments, etc., and to publish such edited information, thereby accomplishing interaction and sharing with other users. Usually, the editing of information in an SNS application is performed based on operations on individual terminals. For example, a user can log in an SNS weblog application to edit a weblog from a personal computer ("PC"). Traditional form of editing information in an SNS application is limited to text editing and image editing. With the popularization of SNS applications, users want to publish more and more information to the Internet using SNS applications. However, it is time-consuming to type long paragraphs or articles in SNS applications on a PC. This has become contradictory to a major feature of SNS applications, which is to allow users to conveniently publish information about themselves. Information, however, does not have to be conveyed in text or images, but can take other forms such as voices or motion pictures. These multimedia forms of information can be entered into SNS applications faster than typing, and can provide richer viewer experience than merely reading text or viewing images. Therefore, there is a need to include multimedia information in the content published by an SNS application. For example, a user may wish to include an audio file recorded by a mobile phone as part of the content of a weblog. In order to do that, the traditional way is for the user to first record a piece of audio information using a mobile phone's audio recording function and save the recorded audio information in the mobile phone. Then the user needs to connect the mobile phone to a PC terminal and save the recorded audio information into the PC terminal's storage space. Finally, the PC terminal can extract from its storage space the recorded audio information and import it into an editing area of an SNS weblog application. This process of editing information is too cumbersome and cannot meet users' actual need for convenient information editing. There is a need for method and terminal for convenient information editing in SNS applications so as to increase user loyalty to these applications.

US 2012/0136943 A1 discloses a system and method for communication between a plurality of users in a communication network. Each of the plurality of users is associated with at least one communication device. The method includes receiving a message from a sender intended for at least one recipient in the communication network wherein the sender has initiated sending of message using the associated communication device. The message may be selected from a group comprising text, audio, video and multimedia. The method further includes customizing the message for at least one recipient based on a set of rules. Additionally, the method includes delivering the customized message to the at least one communication device associated with the at least one recipient based on the availability of the at least one recipient on the at least one communication device.

WO 01/47248 A2 discloses a remote playback system that provides playback or other type of controlled delivery of an information signal available from a first device in response to one or more commands received from a second device, in situations in which the second device is in a location remote from the first device. In an illustrative embodiment, a network connection is established between the second device and a server coupled to, incorporated in or otherwise associated with the first device. The server receives control commands from the second device, and delivers the information signal over the network connection from the first device to the second device in response to the commands. The information signal may be, e.g., audio, video or other multimedia content. The first device may be, e.g., a television, video recorder, audio system, computer or other multimedia device in a home environment of a particular user, and the second device may be, e.g., a wireless device operated outside of the home environment.

US 2012/0005287 A1 discloses a system and method for creating and sending, by means of a telecommunications device, such as a cellular telephone, unique, dynamically personalized multimedia messages to a remote recipient. The method includes generating, capturing, selecting recording, and assembling media-type content inputs such as video, audio, voice, text or graphic, by means of the telecommunications device. The method further includes creating and storing an instruction file. The instructions file includes addresses of at least one media-type content input stored on a remote server device and/or data from the computing device, which, when assembled in the remote server device, create the multimedia message.

US 2010/0107080 A1 discloses a method and apparatus for creating video clips. During operation, a processing device will receive multiple video feeds from multiple video sources. In order to reduce the difficulty in producing multiple clips from the multiple video sources, thumbnails of the captured content are displayed and one-click selection of start and stop points of each clip is allowed. An operator can then pick an annotation (metadata) from events in the game or enter a new one and apply it to any or all of the video clips. Suggested content is then displayed based on the metadata of this annotation and can be bundled with the video clips by choosing from the list of related content. All of this content is then bundled together in the database.

### SUMMARY

Embodiments of the present disclosure provide methods and terminals for editing information in SNS applications. Information editing can be accomplished via inter-terminal interactions. This simplifies the process of information editing operations, increases the convenience of information editing, and enhances user loyalty to the SNS applications. The invention provides methods and terminals as defined in the independent claims.

The invention provides a social network service ("SNS") application information editing method, wherein the SNS application is an application that a user can use to edit information and to publish such edited information thereby accomplishing interaction and sharing with other users. The method comprises:
sending, by a command terminal on which the SNS application is logged into using account information, a search request to a server to search for an execution terminal while the command terminal executes an editing operation in an editing area of the SNS application, wherein the search request comprises identification of and the account information associated with the SNS application, enabling the server to search terminals on which the SNS application is or has been logged into using the same account information as the command terminal, and to return identifications of the terminals,
receiving, by the command terminal, from the server the identifications of the terminals,
selecting, by the command terminal, at least one terminal as an execution terminal based on the identifications of the terminals received from the server, wherein the selected terminal is different from the terminal from which the search request is sent,
sending, by the command terminal, a multimedia information obtaining command to the execution terminal to cause the execution terminal to start a recording application to execute a recording operation in accordance with the multimedia information obtaining command in a case that the execution terminal currently has logged into the SNS application, or log into the SNS application using the account information and then start a recording application to execute a recording operation in accordance with the multimedia information obtaining command in a case that the execution terminal currently has not logged into the SNS application,
receiving, by the command terminal, multimedia information being recorded from the execution terminal,
inserting, by the command terminal, the multimedia information into the editing area of the SNS application; and
publishing, by the command terminal, edited information including the multimedia information in the editing area of the SNS application, to accomplish interaction and sharing with other users.

The invention provides a social network service ("SNS") application information editing method, wherein the SNS application is an application that a user can use to edit information and to publish such edited information thereby accomplishing interaction and sharing with other users. The method comprises:
receiving, by an execution terminal on which the SNS application is or has been logged into using account information, a multimedia information obtaining command from a command terminal, wherein the execution terminal is determined by the command terminal sending a search request to a server to search for the execution terminal, wherein the search request comprises identification of the SNS application and the account information associated with the SNS application, enabling the server to search terminals on which the SNS application is or has been logged into using the same account information as the command terminal, and to return identifications of the terminals, receiving from the server the identifications of the terminals, and selecting at least one terminal as the execution terminal based on the identifications of the terminals received from the server, wherein the selected terminal is different from the terminal from which the search request is sent, and the selected terminal is the execution terminal that
receives the multimedia information obtaining command,
starting, by the execution terminal, a recording application in the execution terminal to execute a recording operation in accordance with the multimedia information obtaining command in a case that the execution terminal currently has logged into the SNS application, or log into the SNS application using the account information and then start the recording application to execute the recording operation in accordance with the multimedia information obtaining command in a case that the execution terminal currently has not logged inot the SNS application;
sending, by the execution terminal to the command terminal, multimedia information obtained by the recording operation,
enabling the command terminal to insert the multimedia information into an editing area of the SNS application and publish edited information including the multimedia information in the editing area of the SNS application to accomplish interaction and sharing with other users.

The invention provides a command terminal. The command terminal on which a social network service ("SNS") application is logged into using account information, wherein the SNS application is an application that a user can use to edit information and to publish such edited information thereby accomplishing interaction and sharing with other users, comprises:
a command module that:
   sends a search request to a server to search for the execution terminal while the command terminal executes an editing operation in an editing area of the SNS application, wherein the search request comprises identification of and the account information associated with the SNS application, enabling the server to search terminals on which the SNS application is or has been logged into using the same account information as the command terminal, and to return identifications of the terminals,
   receives from the server the identifications of the terminals,
   selects at least one terminal as an execution terminal based on the identifications of the terminals received from the server, wherein the selected terminal is different from the terminal from which the search request is sent, and
   sends a multimedia information obtaining command to the execution terminal associated with the command terminal to cause the execution terminal to start a recording application to execute a recording operation in accordance with the multimedia information obtaining command in a case that the execution terminal currently has logged in the SNS application, or log in the SNS application using the account information and then start a recording application to execute a recording operation in accordance with the multimedia information obtaining command in a case that the execution terminal currently has not logged in the SNS application,
an information transmission module that receives multimedia information being recorded from the execution terminal, and
an editing module that inserts the multimedia information into the editing area of the SNS application and publish edited information including the multimedia information in the editing area of the SNS application, to accomplish interaction and sharing with other users.

The invention provides an execution terminal. The execution terminal on which a social network service ("SNS") application is or has been logged into using account information, wherein the SNS application is an application that a user can use to edit information and to publish such edited information thereby accomplishing interaction and sharing with other users, comprises:
a command receiving module that receives a multimedia information obtaining command from a command terminal on which the SNS application is logged into using the account information, wherein the execution terminal is determined by the command terminal sending a search request to a server to search for the execution terminal, wherein the search request comprises identification of the SNS application and the account information associated with the SNS application, enabling the server to search terminals on which the SNS application is or has been logged into using the same account information as the command terminal, and to return identifications of the terminals, receiving from the server the identifications of the terminals, and selecting at least one terminal as the execution terminal based on the identifications of the terminals received from the server, wherein the selected terminal is different from the terminal from which the search request is sent, and the selected terminal is the execution terminal that
receives the multimedia information obtaining command, and
an execution module that obtains multimedia information in accordance with the multimedia information obtaining command in a case that the execution terminal currently has logged into the SNS application, or log into the SNS application using the account information and then start the recording application to execute the recording operation in accordance with the multimedia information obtaining command in a case that the execution terminal currently has not logged into the SNS application, and sends multimedia information obtained by the recording operation to the command terminal, enabling the command terminal to insert the multimedia information into an editing area of the SNS application and publishes edited information including the multimedia information in the editing area of the SNS application to accomplish interaction and sharing with other users.

### BRIEF DESCRIPTION OF THE DRAWINGS

FIG. 1 is a flowchart illustrating an example of the flow of an SNS application information editing method according to various embodiments.
FIG. 2 is a flowchart illustrating an example of the flow of an SNS application information editing method according to various embodiments.
FIG. 3 is a flowchart illustrating an example of the flow of an SNS application information editing method according to various embodiments.
FIG. 4 is a flowchart illustrating an example of the flow of an SNS application information editing method according to various embodiments.
FIG. 5 is a flowchart illustrating an example useful for understanding the invention and shows the flow of an SNS application information editing method.
FIG. 6 is a flowchart illustrating an example useful for understanding the invention and shows the flow of an SNS application information editing method.
FIG. 7 is a flowchart illustrating an example useful for understanding the invention and shows the flow of an SNS application information editing method.
FIG. 8 is a schematic diagram illustrating an example useful for understanding the invention and shows an arrangement of a command terminal.
FIG. 9 is a schematic diagram illustrating an example of an arrangement of a command module illustrated in FIG. 8.
FIG. 10 is a schematic diagram illustrating an example of an arrangement of an information transmission module illustrated in FIG. 8.
FIG. 11 is a schematic diagram illustrating an example of an arrangement of an execution terminal according to various embodiments.
FIG. 12 is a schematic diagram illustrating an example of an arrangement of an execution module illustrated in FIG. 11.
FIG. 13 is a schematic diagram illustrating an example of an arrangement of an execution module illustrated in FIG. 11.
FIG. 14 is a schematic diagram illustrating an example of an arrangement of a server according to various embodiments.
FIG. 15 is a schematic diagram illustrating an example of an arrangement of a server according to various embodiments.
FIG. 16 is a schematic diagram illustrating an example of an arrangement of a server according to various embodiments.

### DETAILED DESCRIPTION OF THE EMBODIMENTS

In the following description of embodiments, reference is made to the accompanying drawings which form a part hereof, and in which it is shown by way of illustration specific embodiments of the disclosure that can be practiced.

As used herein, an "SNS application" refers to any SNS application that can execute editing operations. Examples of such SNS applications include, but are not limited to, SNS weblog applications, SNS comment applications, SNS message applications, SNS microblog applications, and SNS blog applications. Examples of recording applications in accordance with various embodiments include, but are not limited to, audio recording applications, video recording applications, and camera shooting applications. Examples of multimedia information in accordance with various embodiments include, but are not limited to, audio information, image information, and video information. As used herein, a "command terminal" refers to a terminal that sends a multimedia information obtaining command. According to some embodiments, a command terminal is a mobile terminal. According to some other embodiments, a command terminal is a non-mobile terminal. As used herein, a "non-mobile terminal" refers to a terminal not susceptible to frequent moves, although it is not impossible to move the terminal, e.g., a desktop PC or a smart TV. As used herein, an "execution terminal" refers to a terminal that executes a multimedia information obtaining process in accordance with the multimedia information obtaining command, and can be any one of the above-mentioned terminals. An execution terminal is a terminal that comprises a recording application. According to some embodiments, an execution terminal is a mobile terminal. According to some other embodiments, an execution terminal is a non-mobile terminal. Examples of mobile terminals include, but are not limited to, a tablet PC (including, but not limited to, Apple iPad and other touch-screen devices running Apple iOS, Microsoft Surface and other touch-screen devices running the Windows operating system, and tablet devices running the Android operating system), a mobile phone, a smartphone (including, but not limited to, an Apple iPhone, a Windows Phone and other smartphones running Windows Mobile or Pocket PC operating systems, and smartphones running the Android operating system, the Blackberry operating system, or the Symbian operating system), an e-reader (including, but not limited to, Amazon Kindle and Barnes & Noble Nook), a laptop computer (including, but not limited to, computers running Apple Mac operating system, Windows operating system, Android operating system and/or Google Chrome operating system), or an on-vehicle device or a smart television or any smart device running any of the above-mentioned operating systems or any other operating systems, all of which are well known to those skilled in the art..

A command terminal can be associated with an execution terminal. Methods of such association are well known to those skilled in the art. For example, a command terminal and an execution terminal can be associated with each other by each logging in an SNS application using same account information. Alternatively, the execution terminal can log in the SNS application using account information designated by the command terminal, which may or may not be the same as the account information which the command terminal uses to log in the SNS application.

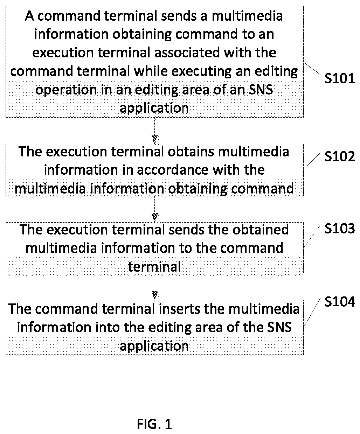

FIG. 1 is a flowchart illustrating an example flow of an SNS application information editing method, the example illustrated in FIG. 1 is an information editing method in an SNS application executed through the interaction between a command terminal and an execution terminal. The method can comprise steps S101 to S104, as set forth below:

S101: a command terminal sends a multimedia information obtaining command to an execution terminal associated with the command terminal while executing an editing operation in an editing area of an SNS application;

A command terminal logs in an SNS application and executes an editing operation in an editing area of the SNS application. For example, the command terminal can execute weblog editing in an editing area of an SNS weblog application. If a user intends to insert multimedia information into the editing area, pursuant to conventional processing method, the user can directly import the multimedia information to be edited from a storage space of the command terminal. According to the invention however, the user obtains multimedia information to be edited from an execution terminal associated with the command terminal, that is, by executing this step, the command terminal sends a multimedia information obtaining command to an execution terminal associated with the command terminal.

S102: the execution terminal obtains multimedia information in accordance with the multimedia information obtaining command;
The execution terminal starts, in accordance with the multimedia information obtaining command, a recording application to obtain recorded multimedia information.

S103: the execution terminal sends the obtained multimedia information to the command terminal;
According to some embodiments, the execution terminal can establish a communication connection with the command terminal. For example, the execution terminal can establish communication connection directly with the command terminal via local area network ("LAN"), Bluetooth or Near Field Communication ("NFC"), and directly sends the obtained multimedia information to the command terminal. According to some embodiments, the execution terminal can send the obtained multimedia information to the command terminal via a server. According to these embodiments, both the command terminal and the execution terminal are connected to the server. Examples of inter-terminal methods of connection are well known to those skilled in the art, and includes, but are not limited to, via the Internet, a LAN (wired or wireless or both), mobile phone communication networks such as GSM, CDMA, TDMA, EDGE, GPRS, 2G, 3G, LTE, 4G, or any other method connecting two terminals, such as via a WiFi network, or such short-distance direct wireless connections as Bluetooth, infrared, or near field communication. Similarly, the connection between a terminal and a server can be via the Internet, a LAN (wired or wireless or both), mobile phone communication networks such as GSM, CDMA, TDMA, EDGE, GPRS, 2G, 3G, LTE, 4G, or any other method connecting a terminal to a server, which methods are also well known to those skilled in the art.

S104: the command terminal inserts the multimedia information into the editing area of the SNS application.

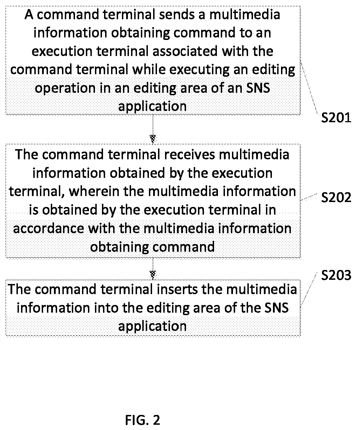

FIG. 2 is a flowchart illustrating an example of the flow of an SNS application information editing method according to the invention The method illustrated in FIG 2 is an information editing method in an SNS application executed by a command terminal. The method comprises steps S201 to S203, as set forth below.
S201: a command terminal sends a multimedia information obtaining command to an execution terminal associated with the command terminal while executing an editing operation in an editing area of an SNS application;
S202: the command terminal receives multimedia information obtained by the execution terminal, wherein the multimedia information is obtained by the execution terminal in accordance with the multimedia information obtaining command;
According to some embodiments, the command terminal can establish a direct communication connection with the execution terminal. For example, the command terminal can establish communication connection directly with the execution terminal via LAN, Bluetooth or NFC, and directly receives the multimedia information from the execution terminal. According to some embodiments, the command terminal can establish a communication connection with an execution terminal via a server, and receive multimedia information obtained by the execution terminal and forwarded by the server. According to these embodiments, both the command terminal and the execution terminal are connected to the server. Examples of inter-terminal methods of connection are well known to those skilled in the art, and includes, but are not limited to, via the Internet, a LAN (wired or wireless or both), mobile phone communication networks such as GSM, CDMA, TDMA, EDGE, GPRS, 2G, 3G, LTE, 4G, or any other method connecting two terminals, such as via a WiFi network, or such short-distance direct wireless connections as Bluetooth, infrared, or near field communication. Similarly, the connection between a terminal and a server can be via the Internet, a LAN (wired or wireless or both), mobile phone communication networks such as GSM, CDMA, TDMA, EDGE, GPRS, 2G, 3G, LTE, 4G, or any other method connecting a terminal to a server, which methods are also well known to those skilled in the art.

S203: the command terminal inserts the multimedia information into the editing area of the SNS application.

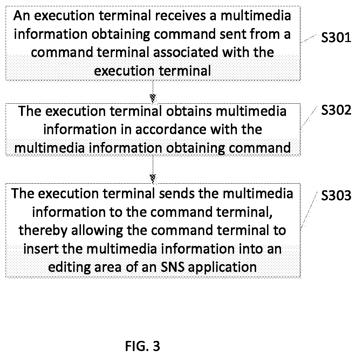

FIG. 3 is a flowchart illustrating the flow of an SNS application information editing method according to the invention The method illustrated in FIG 3 is an information editing method in an SNS application executed by an execution terminal associated with a command terminal. The method comprises steps S301 to S303, as set forth below:
S301: an execution terminal receives a multimedia information obtaining command from a command terminal associated with the execution terminal;
S302: the execution terminal obtains multimedia information in accordance with the multimedia information obtaining command; and
S303: the execution terminal sends the multimedia information to the command terminal, enabling the command terminal to insert the multimedia information into an editing area of an SNS application.

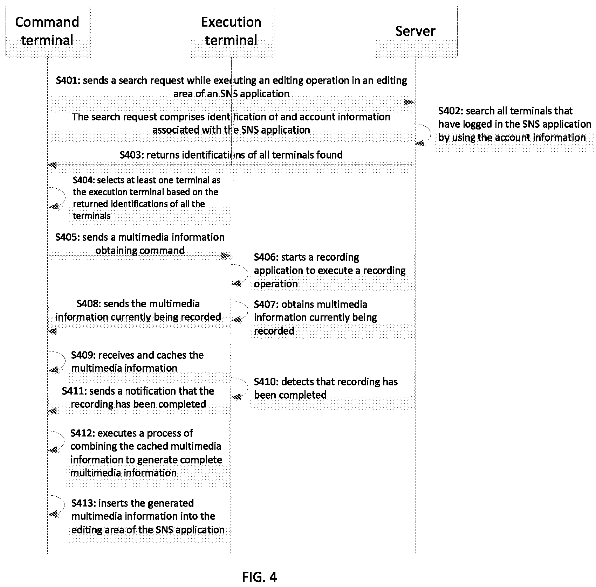

FIG. 4 is a flowchart illustrating the flow of an SNS application information editing method according to the invention The method illustrated in FIG 4 is an information editing method in an SNS application executed through the interaction between a command terminal and an execution terminal. The method comprises steps S401 to S413, as set forth below:
S401: the command terminal sends a search request to a server while executing an editing operation in an editing area of an SNS application to search for an execution terminal associated with the command terminal. The search request comprises identification of and account information associated with the SNS application;
S402: the server searches terminals logged into the SNS application using the account information;
   When a terminal logs in an SNS application, the server can record the identification of the terminal logging in the SNS application, the identification of the SNS application and information relating to the account used by the terminal to log in the SNS application. According to these embodiments, the server can search from the content so recorded terminals logged into the SNS application using the account information, which terminals can include both terminals that are currently using the SNS application and terminals that are not currently using but have logged in the SNS application before.
S403: the server returns identifications of terminals found by it to the command terminal;
S404: the command terminal selects at least one found terminal other than itself as the execution terminal associated with it based on the identifications of the terminals returned by the server;
S405: the command terminal sends a multimedia information obtaining command to the execution terminal;
S406: the execution terminal starts a recording application in the execution terminal to execute a recording operation in accordance with the multimedia information obtaining command;
   If the execution terminal is not currently using the SNS application, it logs, upon receipt of the multimedia information obtaining command, in the SNS application using the account information in accordance with a user's operation, and then starts the recording application to execute the recording operation. If the execution terminal uses the account information to log in the SNS application and is currently using the SNS application, it directly starts the recording application to execute the recording operation upon receipt of the multimedia information obtaining command.
S407: the execution terminal obtains multimedia information recorded by it;
S408: the execution terminal sends the recorded multimedia information to the command terminal;
Steps S407 and S408 represent an embodiment of the process of simultaneous recording and sending multimedia information being recorded, wherein an execution terminal can send multimedia information currently being recorded to a command terminal. According to some embodiments, the size of the multimedia information to be sent can be preset, such that each time when the multimedia information being recorded reaches the preset size, the execution terminal will send such multimedia information to the command terminal. Simultaneous recording and sending can mitigate any pressure imposed on the cache of the execution terminal, reduce the volume of data for each information transmission, and improve the efficiency of information transmission. By way of example only, the execution terminal can break down video information being recorded into segments of 10 seconds each and send each segment to the command terminal separately, enabling the command terminal to cache the segments of video information received and to combine them into one piece of video information based on the order of receipt when the recording is complete.
S409: the command terminal receives and caches the multimedia information from the execution terminal;
S410, the execution terminal detects that recording is complete;
   According to some embodiments, the execution terminal can detect a user's operation of the video recording application and determine whether the recording operation is completed. For example, if the execution terminal detects that the user has exited from the recording application or that the user has pressed a button that ends the recording, it can determine that the recording is complete.
S411: the execution terminal sends notification that the recording is complete to the command terminal;
S412: upon receipt of the notification that the recording is complete from the execution terminal, the command terminal executes a process of combining the cached multimedia information to generate complete multimedia information;
S413: the command terminal inserts the generated complete multimedia information into the editing area of the SNS application.

In steps S411-S413, after receiving the notification that the recording is complete, the command terminal can learn that the execution terminal has completed the multimedia recording. Thereafter, the command terminal can combine the cached multimedia information to generate complete multimedia information and insert such complete multimedia information into the editing area of the SNS application so as to complete the editing operation. Based on the complete multimedia information, the completeness of the content edited can be ensured, thereby making it convenient for the user to browse the information.

According to some embodiments, in step S403, after the server returns the identifications of the terminals found by it to the command terminal, the command terminal can locally store the identifications of the terminals. When executing an information editing process in the SNS application the next time, as a result, steps S401-403 can be skipped, and the command terminal can read the identifications of the terminals directly from its local storage space and select from such terminals at least one terminal other than itself as the execution terminal associated with the command terminal for the purpose of completing the subsequent information editing process.

The following is a specific example illustrating an embodiment of an information editing method in an SNS application in accordance with the present disclosure.

Assume that the command terminal is a PC, the SNS application is an SNS weblog application, and the execution terminal is a mobile phone. A PC terminal user logged in the SNS weblog application using account information comprising a user name of Admin and a password of admin, and started editing a weblog in an editing area of the SNS application. If the user intends to use the recording function of the mobile phone to record audio information and use the audio information as part of the content of the weblog, then the information editing process for this embodiment can comprise the following steps:
The PC terminal sends a search request to a server to search an execution terminal associated with the command terminal. The search request comprises identification of and account information associated with the SNS weblog application. The server searches terminals logged into the SNS application using the account information and returns identifications of the terminals to the PC terminal, wherein the identifications of the terminals comprise the identification of the mobile phone. The PC terminal selects the mobile phone as the execution terminal associated with the PC terminal.

The PC terminal sends a multimedia information obtaining command to the mobile phone. If the mobile phone is currently using the SNS weblog application, the mobile phone will, in accordance with the multimedia information obtaining command, start a recording application in the mobile phone to execute a recording operation and send recorded audio information to the PC terminal. If the mobile phone currently has not logged in the SNS weblog application, the mobile phone will, in accordance with the multimedia information obtaining command, first log in the SNS weblog application using the account information and then start the recording application in the mobile phone to execute the recording operation and send the recorded audio information to the PC terminal. The PC terminal receives and caches the multimedia information from the mobile phone.

The mobile phone sends notification that recording is complete to the PC terminal when it detects that the recording is complete. Upon receipt of the notification that the recording is complete from the mobile phone, the PC terminal combines the cached multimedia information to generate complete multimedia information. The PC terminal inserts the complete multimedia information into the editing area of the SNS weblog application so as to complete the weblog editing operation. The edited weblog comprises complete recorded audio information. The PC terminal publishes the edited weblog.

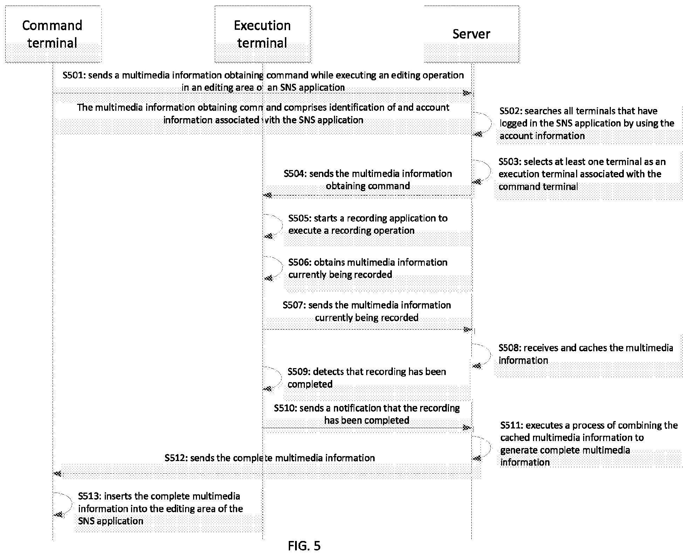

FIG. 5 is a flowchart illustrating an example useful for understanding the invention and shows the flow of an SNS application information editing method. The example illustrated in FIG. 5 is an information editing method in an SNS application executed through the interaction between a command terminal and an execution terminal. The method can comprise steps S501 to S513, as set forth below:
S501: the command terminal sends a multimedia information obtaining command to a server while executing an editing operation in an editing area of an SNS application. The multimedia information obtaining command comprises identification of and account information associated with the SNS application;
S502: the server searches terminals logged into the SNS application using the account information;
S503: the server selects at least one found terminal other than the command terminal itself from the terminals found by the server as the execution terminal associated with the command terminal;
S504: the server sends the multimedia information obtaining command to the execution terminal;
S505: the execution terminal starts a recording application in the execution terminal to execute a recording operation in accordance with the multimedia information obtaining command;
S506: the execution terminal obtains multimedia information recorded by it;
S507: the execution terminal sends the recorded multimedia information to the server;
S508: the server receives and caches the multimedia information from the execution terminal;
S509, the execution terminal detects that recording is complete;
S510: the execution terminal sends notification that the recording is complete to the server;
S511: upon receipt of the notification that the recording is complete from the execution terminal, the server executes a process of combining the cached multimedia information to generate complete multimedia information;
S512: the server sends the complete multimedia information so generated to the command terminal;
S513: the command terminal inserts the complete multimedia information received by it into the editing area region of the SNS application.

There are several differences between the example illustrated in FIG. 5 and that illustrated in FIG. 4. For example, after finding terminals logged into the SNS application using the account information, the server is not required to return identifications of the terminals to the command terminal. Instead, the server selects at least one found terminal as the execution terminal associated with the command terminal and sends the multimedia information obtaining command to the execution terminal. This simplifies the information interaction process. In addition, the server receives and caches the multimedia information from the execution terminal, and combines the cached multimedia information to generate complete multimedia information after receiving notification that recording is complete from the execution terminal. Because the forgoing processes of receiving, caching and combination processing are all completed on the server, this reduces the processing burden on the command terminal.

The following is a specific example illustrating an embodiment of an information editing method in a SNS application in accordance with the present disclosure.

Assume that the command terminal is a PC, the SNS application is an SNS weblog application, and the execution terminal is a mobile phone. A PC terminal user logged in the SNS weblog application using account information comprising a user name of Admin and a password of admin, and started editing a weblog in an editing area of the SNS application. If the user intends to use the recording function of the mobile phone to record audio information and use the audio information as part of the content of the weblog, then the information editing process for this embodiment can comprise the following steps:

The PC terminal sends a multimedia information obtaining command to a server. The multimedia information obtaining command comprises identification of and account information associated with the SNS application. The server searches terminals (including the mobile phone) logged into the SNS application using the account information. The server selects the mobile phone from the terminals found by it as the execution terminal associated with the PC terminal.

The server sends the multimedia information obtaining command to the mobile phone. If the mobile phone is currently using the SNS weblog application, the mobile phone will, in accordance with the multimedia information obtaining command, start a recording application in the mobile phone to execute a recording operation, and then send recorded audio information to the server. If the mobile phone currently has not logged in the SNS weblog application, the mobile phone will, in accordance with the multimedia information obtaining command, first log in the SNS weblog application using the account information, and then start the recording application in the mobile phone to execute the recording operation, and send the recorded audio information to the server. The server will receive and cache the multimedia information from the mobile phone.

The mobile phone sends notification that recording is complete to the server when it detects that the recording is complete. After receiving the notification that the recording is complete from the mobile phone, the server can combine the cached multimedia information to generate complete multimedia information and then send the complete multimedia information to the PC terminal. The PC terminal inserts the complete multimedia information from the server into the editing area of the SNS weblog application so as to complete the weblog editing operation. The edited weblog comprises complete recorded audio information. The PC terminal publishes the edited weblog.

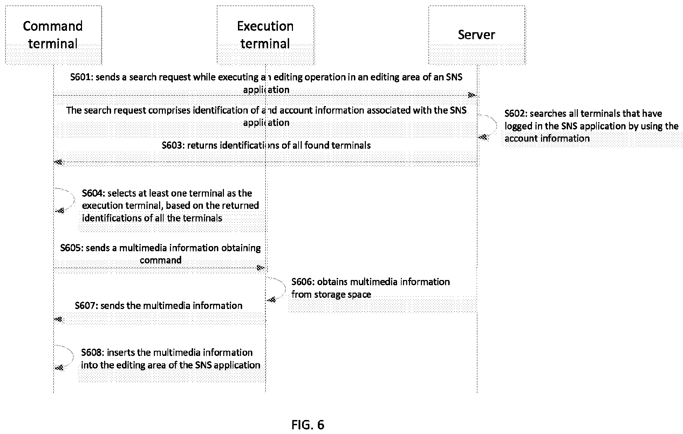

FIG. 6 is a flowchart illustrating an example useful for understanding the invention and shows the flow of an SNS application information editing method. The example illustrated in FIG. 6 is an information editing method in an SNS application executed through the interaction between a command terminal and an execution terminal. The method can comprise steps S601 to S608, as set forth below.
S601: the command terminal sends a search request to a server while executing an editing operation in an editing area in the SNS application. The search request comprises identification of and account information associated with the SNS application;
S602: the server searches terminals logged into the SNS application using the account information;
S603: the server returns identifications of the terminals found by it to the command terminal;
S604: the command terminal, based on the identifications of the terminals returned by the server, selects at least one found terminal other than itself as the execution terminal associated with the command terminal;
S605: the command terminal sends a multimedia information obtaining command to the execution terminal;
S606: the execution terminal obtains multimedia information from its storage space in accordance with the multimedia information obtaining command;
S607: the execution terminal sends the multimedia information obtained by it to the command terminal;
S608: the command terminal inserts the multimedia information into the editing area of the SNS application.

According to some embodiments, in step S603, after the server returns the identifications of the terminals found by it to the command terminal, the command terminal can locally store the identifications of the terminals. When executing an information editing process in the SNS application the next time, as a result, steps S601-603 can be skipped, and the command terminal can read the identifications of the terminals directly from its local storage space and select from such terminals at least one terminal other than itself as the execution terminal associated with the command terminal for the purpose of completing the subsequent information editing process.

The following is a specific example useful for understanding the invention that illustrates an information editing method in a SNS application.

Assume that the command terminal is a PC, the SNS application is an SNS weblog application, and the execution terminal is a mobile phone. A PC terminal user logged in the SNS weblog application using account information comprising a user name of Admin and a password of admin, and started editing a weblog in an editing area of the SNS application. If the user intends to use a piece of audio information stored in the mobile phone as part of the content of the weblog, then the information editing process for this embodiment can comprise the following steps:

The PC terminal sends a search request to the server to search for an execution terminal associated with the command terminal. The search request comprises identification of and account information associated with the SNS weblog application. The server searches terminals logged into the SNS application using the account information and returns identifications of the terminals to the PC terminal, wherein the identifications of the terminals comprise the identification of the mobile phone. The PC terminal selects the mobile phone as the execution terminal associated with the PC terminal.

The PC terminal sends a multimedia information obtaining command to the mobile phone. If the mobile phone is currently using the SNS weblog application, the mobile phone will export audio information that has been stored by it in its storage space and send the same to the PC terminal. If the mobile phone currently has not logged in the SNS weblog application, the mobile phone will, in accordance with the multimedia information obtaining command, first log in the SNS weblog application using the account information, and then export the audio information that has been stored by it in its storage space via the SNS weblog application and send the same to the PC terminal. The PC terminal inserts the multimedia information received by it into the editing area of the SNS weblog application so as to complete the weblog editing operation. The edited weblog comprises complete audio information. The PC terminal publishes the edited weblog.

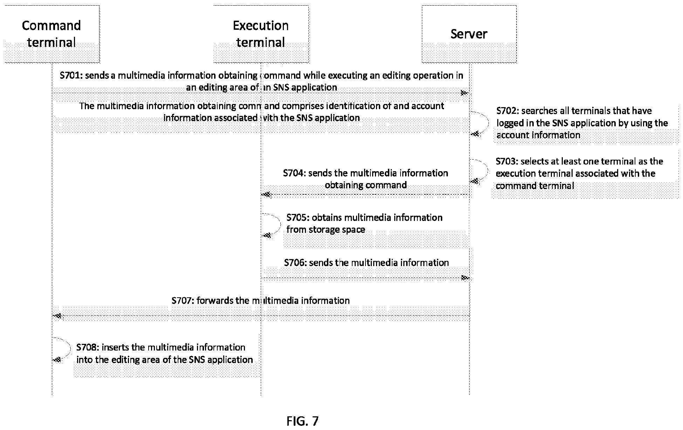

FIG. 7 is a flowchart illustrating an example useful for understanding the invention and shows the flow of an SNS application information editing method. The example illustrated in FIG. 7 is an information editing method in the SNS application executed through the interaction between a command terminal and an execution terminal. The method can comprise steps S701 to S708, as set forth below:
S701: the command terminal sends a multimedia information obtaining command to a server while executing an editing operation in an editing area of an SNS application. The multimedia information obtaining command can comprise identification of and account information associated with the SNS application;
S702: the server searches terminals logged into the SNS application using the account information;
S703: the server selects at least one found terminal other than the command terminal from the terminals found by the server as the execution terminal associated with the command terminal.
S704: the server sends the multimedia information obtaining command to the execution terminal;
S705: the execution terminal obtains multimedia information from its storage space in accordance with the multimedia information obtaining command;
S706: the execution terminal sends the obtained multimedia information to the server;
S707: the server forwards the multimedia information to the command terminal;
S708: the command terminal inserts the multimedia information into the editing area of the SNS application.

There are several differences between the example illustrated in FIG. 7 and that illustrated in FIG. 6. For example, after finding terminals logged into the SNS application using the account information, the server is not required to return identifications of the terminals to the command terminal. The server selects at least one found terminal as the execution terminal associated with the command terminal and sends the multimedia information obtaining command to the execution terminal. This simplifies the information interaction process. In addition, the server can forward the multimedia information from the execution terminal, which will enable an ordinary transmission of the multimedia information even when the command terminal and the execution terminal cannot establish a communication connection directly.

The following is a specific example useful for understanding the invention and illustrates an information editing method in a SNS application in accordance with the present disclosure.

Assume that the command terminal is a PC, the SNS application is an SNS weblog application, and the execution terminal is a mobile phone. A PC terminal user logged in the SNS weblog application using account information comprising a user name of Admin and a password of admin, and started editing a weblog in an editing area of the SNS application. If the user intends to use a piece of audio information stored in the mobile phone as part of the content of the weblog, then the information editing process for this embodiment can comprise the following steps:

The PC terminal sends a multimedia information obtaining command to a server. The multimedia information obtaining command comprises identification of and account information associated with the SNS application. The server searches terminals (including the mobile phone) logged into the SNS application using the account information. The server selects the mobile phone from the terminals found by the server as the execution terminal associated with the PC terminal.

The server sends the multimedia information obtaining command to the mobile phone. If the mobile phone is currently using the SNS weblog application, the mobile phone will export the audio information that has been stored by it in its storage space and send the same to the server; if the mobile phone currently has not logged in the SNS weblog application, the mobile phone will, in accordance with the multimedia information obtaining command, first log in the SNS weblog application using the account information, and then export the audio information that has been stored by it in its storage space via the SNS weblog application and send the same to the server. The server forwards the received multimedia information to the PC terminal. The PC terminal inserts the multimedia information received by it into the editing area of the SNS weblog application to complete the weblog editing operation. The edited weblog comprises complete audio information. The PC terminal publishes the edited weblog.

According to the invention the command terminal sends a multimedia information obtaining command to an execution terminal associated with the command terminal while executing an editing operation in an SNS application, and the execution terminal obtains multimedia information and sends the same to the command terminal. Because the command terminal can obtain multimedia information directly from its associated execution terminal in accordance with editing needs, convenient transmission of multimedia information between terminals can be accomplished, which simplifies the process of information editing, increases the convenience of information editing, and enhances the SNS application's user loyalty.

Some or all of the steps of an SNS application information editing method, such as those illustrated in FIGs. 1-7 and described in detail hereinabove, can be carried out by executing a program. The program can be stored in a computer-readable storage medium. Accordingly, the present disclosure discloses a computer-readable storage medium in accordance with various embodiments.

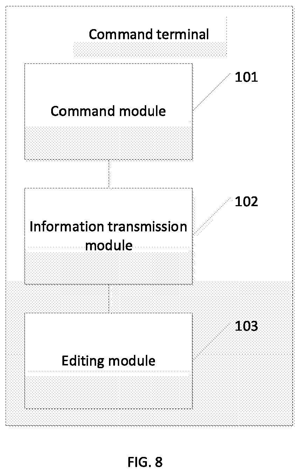

FIGs. 8-10 illustrate example arrangements of a command terminal according to various embodiments. The command terminals illustrated in FIGs. 8-10 and described below can be used in the various methods described in detail hereinabove.

FIG. 8 is a schematic diagram illustrating an example useful for understanding the invention and shows an arrangement of a command terminal. The command terminal can comprise: a command module 101, an information transmission module 102, and an editing module 103.

The command module 101 sends a multimedia information obtaining command to an execution terminal associated with the command terminal while the command terminal is executing an editing operation in an editing area of an SNS application.

The command terminal can log in the SNS application and start an editing operation in the editing area of the SNS application, e.g., to edit a weblog in an editing area of an SNS weblog application. If a user intends to insert multimedia information into the editing area, pursuant to conventional processing method, the user may directly import the multimedia information to be edited from the storage space of the command terminal; however, according to embodiments of the present disclosure, the user can obtain the multimedia information to be edited from an execution terminal associated with the command terminal, that is, the command module 101 can send a multimedia information obtaining command to an execution terminal associated with the command terminal.

The command module 101 can have several arrangements:

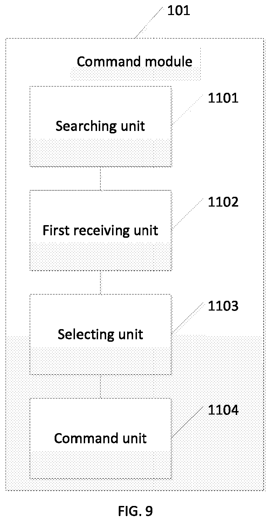

FIG. 9 is a schematic diagram illustrating an example of an arrangement of a command module illustrated in FIG. 8. The command module 101 comprises a searching unit 1101, a first receiving unit 1102, a selecting unit 1103 and a command unit 1104.

The searching unit 1101 sends a search request to a server while the command terminal is executing an editing operation in an editing area of an SNS application to search an execution terminal associated with the command terminal. The search request comprises identification of and account information associated with the SNS application;

The first receiving unit 1102 receives identifications of terminals logged into the SNS application using the account information returned by the server;

The selecting unit 1103 selects at least one terminal other than the command terminal as the execution terminal associated with the command terminal based on the identifications of the terminals returned by the server;

The command unit 1104 sends a multimedia information obtaining command to the execution terminal.

According to some embodiments, the command module 101 can send the multimedia information obtaining command to a server. The multimedia information obtaining command can comprise identification of and account information associated with an SNS application, which can allow the server to select at least one terminal other than the command terminal as the execution terminal associated with the command terminal from terminals logged into the SNS application using the account information, and to send the multimedia information obtaining command to the execution terminal.

The information transmission module 102 receives multimedia information obtained by the execution terminal, wherein the multimedia information is obtained in accordance with the multimedia information obtaining command;

According to some examples useful for understanding the invention, the command terminal can directly establish a communication connection with the execution terminal and the information transmission module 102 can directly receive the multimedia information from the execution terminal. According to some other examples useful for understanding the invention, the command terminal can establish a communication connection with the execution terminal via a server and the information transmission module 102 can receive the multimedia information obtained by the execution terminal as forwarded by the server.

The information transmission module 102 can have several arrangements according to various embodiments:

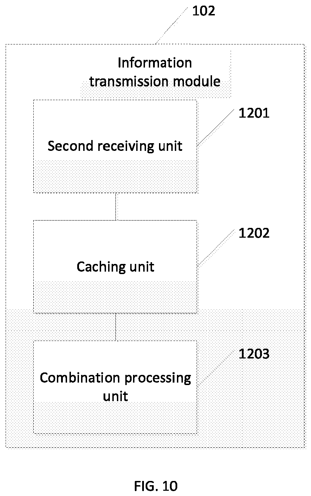

FIG. 10 is a schematic diagram illustrating an example of an arrangement of an information transmission module illustrated in FIG. 8. The information transmission module 102 can comprise: a second receiving unit 1201, a caching unit 1202, and a combination processing unit 1203.

The second receiving unit 1201 receives recorded multimedia information, wherein the recorded multimedia information is obtained by the execution terminal by starting a recording application in accordance with the multimedia information obtaining command;
The caching unit 1202 caches the received multimedia information;
The combination processing unit 1203 executes a process of combining the cached multimedia information to generate complete multimedia information upon its receipt of notification that recording of the multimedia information is complete from the execution terminal.

According to some embodiments, the information transmission module 102 can receive complete multimedia information generated by a server, wherein the complete multimedia information is generated by a server in accordance with multimedia information recorded by the execution terminal.

According to some other examples useful for understanding the invention, the information transmission module 102 can receive multimedia information obtained by an execution terminal from its storage space. According to yet some other examples useful for understanding the invention, the information transmission module 102 can receive information obtained by an execution terminal from its storage space as forwarded by a server.

The editing module 103 inserts the multimedia information into the editing area of the SNS application.

The functions of each functional module in the command terminal according to various embodiments can be specifically implemented in accordance with the forgoing methods and the implementation of those functions has been described hereinabove in the forgoing exemplary method embodiments.

According to the exemplary embodiment of a command terminal set forth above, the command terminal sends a multimedia information obtaining command to an execution terminal associated with the command terminal while executing an editing operation in an SNS application, and the execution terminal sends obtained multimedia information to the command terminal. Because the command terminal can directly obtain multimedia information from the associated execution terminal in accordance with editing needs, convenient multimedia information transmission between terminals can be accomplished, which simplifies the process of information editing operation, increases the convenience of information editing, and enhances the SNS application's user loyalty.

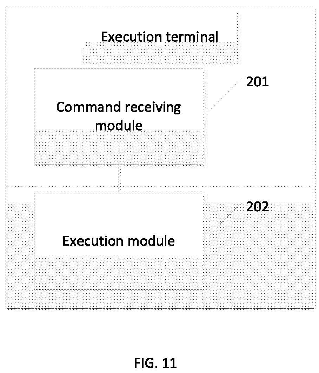

FIGs. 11-13 illustrate example arrangements of an execution terminal according to various embodiments. The execution terminals illustrated in FIGs. 11-13 and described below can be used in the various methods described in detail hereinabove, as well as in the various exemplary command terminal embodiments described in detail hereinabove.

FIG. 11 is a schematic diagram illustrating an example of an arrangement of an execution terminal according to the invention The execution terminal comprises a command receiving module 201 and an execution module 202.

The command receiving module 201 receives a multimedia information obtaining command from a command terminal associated with the execution terminal;
The execution module 202 obtains multimedia information in accordance with the multimedia information obtaining command and sends the obtained multimedia information to the command terminal enabling the command terminal to insert the multimedia information into an editing area of an SNS application.

The execution module 202 can have several arrangements according to various embodiments:

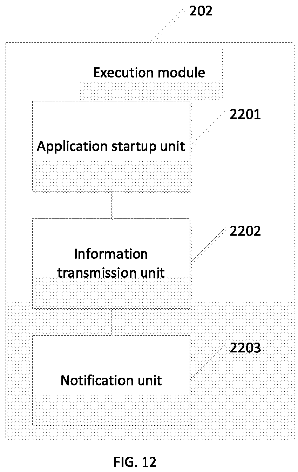

FIG. 12 is a schematic diagram illustrating an example of an arrangement of an execution module illustrated in FIG. 11. The execution module can comprise: an application startup unit 2201, an information transmission unit 2202 and a notification unit 2203.

The application startup unit 2201 starts, in accordance with a multimedia information obtaining command, a recording application in the execution terminal to execute a recording operation;
The information transmission unit 2202 obtains recorded multimedia information and sends the same to the command terminal enabling the command terminal to receive and cache the recorded multimedia information;
The notification unit 2203 sends notification that recording is complete to the command terminal when it detects that the recording is complete, enabling the command terminal to, in accordance with the notification that the recording is complete, execute a process of combining the cached multimedia information to generate complete multimedia information; or sends notification that the recording is complete to a server when it detects that the recording is complete, enabling the server to, in accordance with the notification that the recording is complete, execute a process of combining the cached multimedia information to generate complete multimedia information and to send the same to the command terminal.

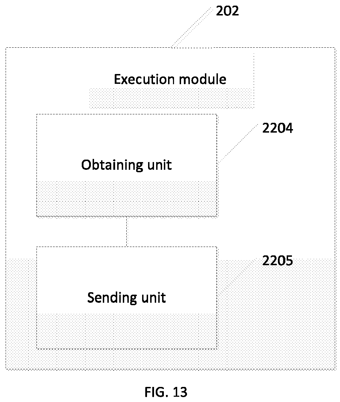

FIG. 13 is a schematic diagram illustrating an example of an arrangement of an execution module illustrated in FIG. 11. The execution module 202 can comprise: obtaining unit 2204 and sending unit 2205.

In an example useful for understanding the invention, the obtaining unit 2204 obtains the multimedia information from its storage space in accordance with the multimedia information obtaining command;
The sending unit 2205 sends the obtained multimedia information to the command terminal; or forwards the obtained multimedia information to the command terminal via a server.

The functions of each functional module in the execution terminal according to various embodiments can be specifically implemented in accordance with the forgoing methods and the implementation of those functions has been described hereinabove in the forgoing exemplary method embodiments.

According to the above exemplary execution terminal embodiments, the command terminal described in the embodiments of the present disclosure sends a multimedia information obtaining command to an execution terminal associated with the command terminal while executing an editing operation in an SNS application, and the execution terminal obtains multimedia information and sends the same to the command terminal. Because the command terminal can obtain multimedia information directly from its associated execution terminal in accordance with editing needs, convenient transmission of multimedia information between terminals can be accomplished, which simplifies the process of information editing, increases the convenience of information editing, and enhances the SNS application's user loyalty.

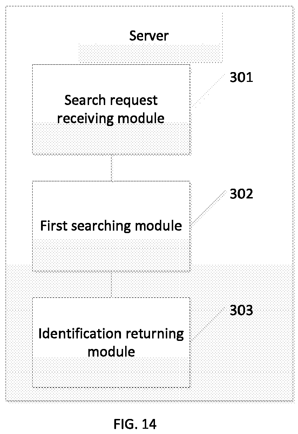

FIGs. 14-16 illustrate example arrangements of a server according to various embodiments. The servers illustrated in FIGs. 14-17 and described below can be used in the various methods described in detail hereinabove.

FIG. 14 is a schematic diagram illustrating an example of an arrangement of a server according to the invention. The server comprises a search request receiving module 301, a first searching module 302, and an identification returning module 303.

The search request receiving module 301 receives a search request from a command terminal to search for an execution terminal associated with the command terminal, wherein the search request comprises identification of and account information associated with an SNS application;
The first searching module 302 searches all terminals logged into the SNS application using the account information;
The identification returning module 303 sends identifications of terminals found by the server to the command terminal, enabling the command terminal to select at least one found terminal other than the command terminal as the execution terminal associated with the command terminal based on the identifications of the terminals sent to the command terminal, and to send a multimedia information obtaining command to the execution terminal.

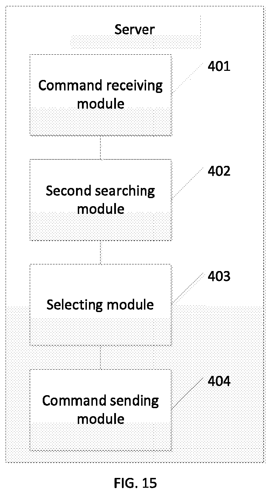

FIG. 15 is a schematic diagram illustrating an example useful for understanding an arrangement of a server. The server can comprise: a command receiving module 401, a second searching module 402, a selecting module 403, and a command sending module 404.

The command receiving module 401 receives a multimedia information obtaining command from a command terminal, wherein the multimedia information obtaining command comprises identification of and account information associated with an SNS application.

The second searching module 402 searches terminals logged into the SNS application using the account information.

The selecting module 403 selects at least one found terminal other than the command terminal as an execution terminal associated with the command terminal.

The command sending module 404 sends the multimedia information obtaining command to the execution terminal, enabling the execution terminal to obtain multimedia information in accordance with the multimedia information obtaining command.

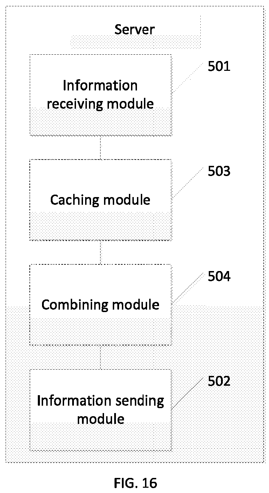

FIG. 16 is a schematic diagram illustrating an example of an arrangement of a server according to various embodiments. The server can comprise: an information receiving module 501 and an information sending module 502.

The information receiving module 501 receives multimedia information from an execution terminal. The multimedia information is multimedia information recorded by the execution terminal.

The information sending module 502 sends multimedia information, either as received by the information receiving module 501, or as processed by the server, to a command terminal, enabling the command terminal to insert the multimedia information from the information sending module 502 into an editing area of an SNS application.

According to some embodiments, the information sending module 502 sends the multimedia information as received by the information receiving module 501. According to some other embodiments, multimedia information being sent by the information sending module 502 has gone through certain processing by the server. According to these embodiments, the server can optionally comprise: a caching module 503 and a combining module 504. The caching module 503 caches the multimedia information received by the information receiving module 501. The combining module 504 receives notification that recording of the multimedia information is complete from the execution terminal, and combines the cached multimedia information upon receipt of the notification to generate complete multimedia information. According to these embodiments, the multimedia information from the information sending module 502 to the command terminal is the complete multimedia information after the combination processing by the combining module 504.

Once a command terminal receives multimedia information the command terminal can perform a number of operations on the received multimedia information, either automatically or upon user command. The command terminal inserts the received multimedia information into an editing area of an SNS application where a user has initiated the execution of an editing operation. The inserted multimedia information can be in the same form as the information already being edited in the editing area. For example, a user has started typing in an editing area of an SNS application and the inserted multimedia information is a text file. In this example, the user can insert the text information contained in the text file into the editing area and keep editing the inserted information together with the text already input by the user into the editing area. Alternatively, the inserted multimedia information can be in a form different from the information the user has started to edit in the editing area. For example, a user has started typing in an editing area of an SNS application and the inserted multimedia information is a video file. According to these embodiments, the information eventually published by the user via the SNS application can be a combination of different forms of multimedia information, e.g., a combination of both text and video information.

Multimedia information sent from an execution terminal to a command terminal can comprise different forms of information. By way of example only, an execution terminal can associate audio information with image information and send both pieces of information to a command terminal, either simultaneously or consecutively. The audio information can either be audio information previously stored in a storage space of the execution terminal or audio information being recorded by the execution terminal, e.g., by voice recording function of the execution terminal such as an integrated microphone of a mobile phone. Similarly, the image information can either be image information previous stored in a storage space of the execution terminal or image information being recorded by the execution terminal, e.g., by image capturing function of the execution terminal such as an integrated camera of a mobile phone. When the command terminal receives both pieces of information, the command terminal can separate them and insert only one piece of information into an editing area of an SNS application or insert both pieces of information into different positions in a same editing area or different editing areas of an SNS application. Alternatively, the command terminal can insert both pieces of information as a whole into an editing area of an SNS application.

The following is a specific example illustrating an embodiment of an information editing method in an SNS application in accordance with the present disclosure.

A user may wish to insert a picture with audio narration into an editing area of an SNS application running on a PC. She can instruct the PC to send a multimedia information obtaining command to an execution terminal such as a mobile phone, and use the mobile phone to take a picture and/or record a piece of audio narration. The mobile phone can then send multimedia information comprising both the picture and the audio narration to the PC, which can insert the received picture and audio narration into the editing area of the SNS application.

The following is another specific example illustrating an embodiment of an information editing method in an SNS application in accordance with the present disclosure.

A user may wish to add watermark or an image overlay to a video being recorded by an execution terminal before sending the video information from the execution terminal to a command terminal. The execution terminal can add the overlay and send the video information with the image overlay to the command terminal, which can then insert the video information with the image overlay to an editing area of an SNS application.

An execution terminal can perform one or more of various operations to multimedia information before sending the multimedia information to a command terminal. By way of example only, if the multimedia information is text information, the execution terminal can allow a user of the execution terminal to edit the text information before sending it to a command terminal. If the multimedia information is image information such as a digital picture, the execution terminal can perform such image editing operations as cropping, sharpening, adjusting the brightness, adjusting the contrast, changing from color to greyscale, red-eye removal, and adding text or voice to the image information. If the multimedia information is video information, the execution terminal can perform such editing operations as adjusting the brightness, adjusting the contrast, changing from color to greyscale or any other color theme or mode, and adding text such as subtitles or image overlay such as watermark to the video information.

Upon receipt of the multimedia information, the command terminal can, either automatically or following user command upon prompt by the terminal, perform certain operation(s) on the received multimedia information to convert it to a different form and then insert the multimedia information in the converted form into an editing area of an SNS application.

If the multimedia information is a piece of audio information, e.g., in the form of an audio file recognizable by the command terminal, the command terminal can perform, either automatically or following user command upon prompt by the command terminal, voice recognition on the audio information and recognize whether there is any human voice in the audio information. The voice recognition can be performed by the SNS application itself. Alternatively, the voice recognition can be performed by the SNS application calling another application with voice-recognition function. According to some embodiments, the other application with voice-recognition function can be installed on the same terminal as the SNS application. According to some other embodiments, the voice-recognition function can be provided by a terminal different from the terminal on which the SNS application is installed. According to yet some other embodiments, the voice-recognition function can be provided by a server. Methods of voice recognition are well-known to those skilled in the art.

After an SNS application or another application with voice-recognition function has detected that the received multimedia information contains human voice, the command terminal can perform, either automatically or following user command upon prompt by the command terminal, a speech-to-text operation to convert any speech contained in the human voice to text. The SNS application can then insert the converted text into an editing area of the SNS application. The speech-to-text operation can be performed by the SNS application itself. Alternatively, the speech-to-text operation can be provided by the SNS application calling another application with speech-to-text function. According to some embodiments, the other application with text-to-speech function can be installed on the same terminal as the SNS application. According to some other embodiments, the text-to-speech function can be provided by a terminal different from the terminal on which the SNS application is installed. According to yet some other embodiments, the text-to-speech function can be provided by a server. Methods of text-to-speech conversion are well-known to those skilled in the art.

If the multimedia information is a piece of image information comprising text information, e.g., in the form of an image file recognizable by the command terminal, wherein the image comprises text in it, such as a picture of a newspaper article taken by a digital camera on a mobile phone, the command terminal can perform, either automatically or following user command upon prompt by the command terminal, text recognition on the image information and recognize whether there is any text in any written language in the image information. The text recognition can be performed by the SNS application itself. Alternatively, the text recognition can be performed by the SNS application calling another application with text-recognition function. According to some embodiments, the other application with text-recognition function can be installed on the same terminal as the SNS application. According to some other embodiments, the text-recognition function can be provided by a terminal different from the terminal on which the SNS application is installed. According to yet some other embodiments, the text-recognition function can be provided by a server. Methods of text recognition are well-known to those skilled in the art.

After an SNS application or another application with text-recognition function has detected that the received multimedia information contains text in any written language, the command terminal can perform, either automatically or following user command upon prompt by the command terminal, an optical character recognition ("OCR") operation to convert any text information contained in the image information to text. The SNS application can then insert the converted text into an editing area of the SNS application. The OCR operation can be performed by the SNS application itself. Alternatively, the OCR operation can be provided by the SNS application calling another application with OCR function. According to some embodiments, the other application with OCR function can be installed on the same terminal as the SNS application. According to some other embodiments, the OCR function can be provided by a terminal different from the terminal on which the SNS application is installed. According to yet some other embodiments, the OCR function can be provided by a server. Methods of OCR are well-known to those skilled in the art.

If the multimedia information is a piece of text information, e.g., in the form of a text file recognizable by the command terminal, the command terminal can perform, either automatically or following user command upon prompt by the command terminal, text-to-speech conversion on the text information and convert the text information into audio information comprising speech. The text-to-speech conversion can be performed by the SNS application itself. Alternatively, the text-to-speech conversion can be performed by the SNS application calling another application with text-to-speech conversion function. According to some embodiments, the other application with text-to-speech conversion function can be installed on the same terminal as the SNS application. According to some other embodiments, the text-to-speech conversion function can be provided by a terminal different from the terminal on which the SNS application is installed. According to yet some other embodiments, the text-to-speech conversion function can be provided by a server. Methods of text-to-speech conversion are well-known to those skilled in the art.

According to some embodiments, the above-mentioned conversions of the form of multimedia information, e.g., the conversion of audio information containing human voice into text, the conversion of image information containing text information into text, or text-to-speech conversion, are performed on the execution terminal or another terminal different from the command terminal, such that the multimedia information from the execution terminal to the command terminal, either directly or via a server, is in the converted form already, and the command terminal can insert the received information into an editing area of an SNS application without any further conversion, regardless of any combination processing performed by the command terminal to combine all cached multimedia information it has received, if any.

According to some embodiments, a command terminal has decoding capability with regard to the multimedia information from an execution terminal. According to these embodiments, the multimedia information sent from the execution terminal to the command terminal do not have to be decoded on the execution terminal before being sent to the command terminal. According to some other embodiments, a command terminal does not have to have decoding capability with regard to multimedia information sent to it from an execution terminal. According to these embodiments, the multimedia information from the execution terminal to the command terminal can be decoded on the execution terminal before being sent to the command terminal. Methods of decoding multimedia information on a command terminal or an execution terminal are well known to those skilled in the art. Those skilled in the art will readily appreciate that the transmission of a decoded multimedia file can take longer than the transmission of the same multimedia file before decoding due to increased file size as a result of the decoding process. In addition, decoding a multimedia file, particularly a video file, on a mobile terminal can consume considerable processing power. Therefore, a preferred embodiment, especially in the case of sending an audio or video file to a command terminal, is for the command terminal to have decoding capability and to transfer the audio or video file from the execution terminal to the command terminal without being decoded before the transfer.

Those skilled in the art will readily appreciate that where ordinal numbers such as "first" and "second" are used herein, they serve to distinguish and identify different modules with similar names, but do not imply any similarity in either function or order, temporal, spatial, or otherwise.

Persons of ordinary skill in the art can readily appreciate that all or part of the steps of the methods described in the embodiments above can be executed by relevant hardware instructed by a program that may be stored in a computer-readable memory medium. The readable memory medium may be, for example, a read-only memory ("ROM"), a random access memory ("RAM'), a magnetic disk or a compact disc.

Although the disclosed embodiments have been fully described with reference to the accompanying drawings, it is to be noted that various changes and modifications will become apparent to those skilled in the art. Such changes and modifications are to be understood as being included within the scope of the disclosed embodiments as defined by the appended claims.

## Claims

1. A social network service ("SNS") application information editing method, wherein the SNS application is an application that a user can use to edit information and to publish such edited information thereby accomplishing interaction and sharing with other users, wherein the method comprises:
sending (S401), by a command terminal on which the SNS application is logged into using account information, a search request to a server to search for an execution terminal while the command terminal executes an editing operation in an editing area of the SNS application, wherein the search request comprises identification of and the account information associated with the SNS application, enabling the server to search terminals on which the SNS application is or has been logged into using the same account information as the command terminal, and to return identifications of the terminals,
receiving, by the command terminal, from the server the identifications of the terminals
selecting, by the command terminal, (S404) at least one terminal as the execution terminal based on the identifications of the terminals received from the server, wherein the selected terminal is different from the terminal from which the search request is sent,
sending (S405), by the command terminal, a multimedia information obtaining command to the execution terminal to cause the execution terminal to start a recording application to execute a recording operation in accordance with the multimedia information obtaining command in a case that the execution terminal currently has logged into the SNS application, or log into the SNS application using the account information and then start a recording application to execute a recording operation in accordance with the multimedia information obtaining command in a case that the execution terminal currently has not logged into the SNS application,
receiving (S409), by the command terminal, multimedia information being recorded from the execution terminal,
inserting (S413), by the command terminal, the multimedia information into the editing area of the SNS application; and
publishing, by the command terminal, edited information including the multimedia information in the editing area of the SNS application, to accomplish interaction and sharing with other users.

2. The SNS application information editing method according to claim 1, wherein receiving (S409), by the command terminal, multimedia information being recorded from the execution terminal comprises:
receiving, by the command terminal, segments of video information being recorded from the execution terminal directly via local area network, Bluetooth or Near Field Communication, to generate complete multimedia information, wherein the video information being recorded is broke down into multiple segments by the execution terminal and each segment of the video information is sent to the command terminal separately,
combining (S412), by the command terminal, the segments of the video information upon receipt of a notification that the recording operation is complete from the execution terminal to generate complete multimedia information.

3. The SNS application information editing method according to claim 1, wherein after the server returns the identifications of the terminals to the command terminal, locally storing the identifications of the terminals for using at next time.

4. A social network service ("SNS") application information editing method, wherein the SNS application is an application that a user can use to edit information and to publish such edited information thereby accomplishing interaction and sharing with other users, wherein the method comprises:
receiving, by an execution terminal on which the SNS application is or has been logged into using account information, a multimedia information obtaining command from a command terminal, wherein the execution terminal is determined by the command terminal sending a search request to a server to search for the execution terminal, wherein the search request comprises identification of the SNS application and the account information associated with the SNS application, enabling the server to search terminals on which the SNS application is or has been logged into using the same account information as the command terminal, and to return identifications of the terminals, receiving from the server the identifications of the terminals, and selecting at least one terminal as the execution terminal based on the identifications of the terminals received from the server, wherein the selected terminal is different from the terminal from which the search request is sent, and the selected terminal is the execution terminal that
receives the multimedia information obtaining command,
starting (S406), by the execution terminal, a recording application in the execution terminal to execute a recording operation in accordance with the multimedia information obtaining command in a case that the execution terminal currently has logged into the SNS application, or log into the SNS application using the account information and then start the recording application to execute the recording operation in accordance with the multimedia information obtaining command in a case that the execution terminal currently has not logged into the SNS application;
sending (S408), by the execution terminal to the command terminal, multimedia information obtained by the recording operation, enabling the command terminal to insert the multimedia information into an editing area of the SNS application and publish edited information including the multimedia information in the editing area of the SNS application to accomplish interaction and sharing with other users.

5. The SNS application information editing method according to claim 4, wherein sending (S408), by the execution terminal to the command terminal, multimedia information obtained by the recording operation comprises:
sending, by the execution terminal to the command terminal directly via local area network, Bluetooth or Near Field Communication, segments of the video information separately and a notification that the recording operation is complete, wherein the segments of the video information are combined (S412) by the command terminal to generate complete multimedia information.

6. A command terminal on which a social network service ("SNS") application is logged into using account information, wherein the SNS application is an application that a user can use to edit information and to publish such edited information thereby accomplishing interaction and sharing with other users, wherein the command terminal comprises:
a command module that:
is configured to send (S401) a search request to a server to search for the execution terminal while the command terminal executes an editing operation in an editing area of the SNS application, wherein the search request comprises identification of and the account information associated with the SNS application, enabling the server to search terminals on which the SNS application is or has been logged into using the same account information as the command terminal, and to return identifications of the terminals, is configured to receive from the server the identifications of the terminals is configured to select (S404) at least one terminal as the execution terminal based on the identifications of the terminals received from the server, wherein the selected terminal is different from the terminal from which the search request is sent, and
is configured to send (S405) a multimedia information obtaining command to the execution terminal associated with the command terminal to cause the execution terminal to start a recording application to execute a recording operation in accordance with the multimedia information obtaining command in a case that the execution terminal currently has logged into the SNS application, or log into the SNS application using the account information and then start a recording application to execute a recording operation in accordance with the multimedia information obtaining command in a case that the execution terminal currently has not logged into the SNS application,
an information transmission module that is configured to receive (S409) multimedia information being recorded from the execution terminal, and
an editing module that is configured to insert (S413) the multimedia information into the editing area of the SNS application and is configured to publish edited information including the multimedia information in the editing area of the SNS application, to accomplish interaction and sharing with other users.

7. The command terminal according to claim 6, wherein the information transmission module is further configured to:
receive segments of video information being recorded from the execution terminal directly via local area network, Bluetooth or Near Field Communication, to generate complete multimedia information, wherein the video information being recorded is broke down into multiple segments by the execution terminal and each segment of the video information is sent to the command terminal separately,
combine (S412) the segments of the video information upon receipt of a notification that the recording operation is complete from the execution terminal to generate complete multimedia information.

8. The command terminal according to claim 6, wherein after the return of the identifications of the terminals by the server to the command terminal, the command terminal is adapted to locally store the identifications of the terminals for using at next time.

9. An execution terminal on which a social network service ("SNS") application is or has been logged into using account information, wherein the SNS application is an application that a user can use to edit information and to publish such edited information thereby accomplishing interaction and sharing with other users, wherein the execution terminal comprises:
a command receiving module that is configured to receive a multimedia information obtaining command from a command terminal on which the SNS application is logged into using the account information, wherein the execution terminal is determined by the command terminal sending a search request to a server to search for the execution terminal, wherein the search request comprises identification of the SNS application and the account information associated with the SNS application, enabling the server to search terminals on which the SNS application is or has been logged into using the same account information as the command terminal, and to return identifications of the terminals, receiving from the server the identifications of the terminals, and selecting at least one terminal as the execution terminal based on the identifications of the terminals received from the server, wherein the selected terminal is different from the terminal from which the search request is sent, and the selected terminal is the execution terminal that is configured to receive the multimedia information obtaining command, and
an execution module that is configured to obtain multimedia information in accordance with the multimedia information obtaining command in a case that the execution terminal currently has logged into the SNS application, or is configured to log into the SNS application using the account information and then is configured to start (S406) the recording application to execute the recording operation in accordance with the multimedia information obtaining command in a case that the execution terminal currently has not logged into the SNS application, and is configured to send (S408) multimedia information obtained by the recording operation to the command terminal, enabling the command terminal to insert the multimedia information into an editing area of the SNS application and is configured to publish edited information including the multimedia information in the editing area of the SNS application to accomplish interaction and sharing with other users.

10. The execution terminal according to claim 9, wherein the execution module is further configured to:
send to the command terminal directly via local area network, Bluetooth or Near Field Communication, segments of the video information separately and a notification that the recording operation is complete, wherein the segments of the video information are combined by the command terminal to generate complete multimedia information.

## Patentansprüche

1. Verfahren zum Editieren von Informationen einer Anwendung eines sozialen Netzwerk-Dienstes ("SNS"), wobei die SNS-Anwendung eine Anwendung ist, die ein Benutzer verwenden kann, um Informationen zu editieren und solche editierten Informationen zu veröffentlichen, wodurch eine Interaktion und ein gemeinsames Benutzen mit anderen Benutzern erreicht wird, wobei das Verfahren umfasst
Senden (S401), durch ein Befehlsendgerät, an dem die SNS-Anwendung unter Verwendung von Kontoinformationen angemeldet ist, einer Suchanforderung an einen Server, um nach einem Ausführungsendgerät zu suchen, während das Befehlsendgerät einen Editiervorgang in einem Editierbereich der SNS-Anwendung ausführt, wobei die Suchanforderung eine Identifikation der SNS-Anwendung und die mit ihr verbundenen Kontoinformationen umfasst, wodurch der Server in die Lage versetzt wird, Endgeräte zu suchen, an denen die SNS-Anwendung unter Verwendung derselben Kontoinformationen wie das Befehlsendgerät angemeldet ist oder angemeldet wurde, und Identifikationen der Endgeräte zurückzugeben,
Empfangen, durch das Befehlsendgerät, der Identifikationen der Endgeräte von dem Server,
Auswählen (S404), durch das Befehlsendgerät, mindestens eines Endgeräts als das Ausführungsendgerät auf der Grundlage der Identifikationen der Endgeräte, die von dem Server empfangenen wurden, wobei das ausgewählte Endgerät sich von dem Endgerät unterscheidet, von dem die Suchanfrage gesendet wird,
Senden (S405), durch das Befehlsendgerät, eines Befehls zum Erhalten von Multimedia-Informationen an das Ausführungsendgerät, um das Ausführungsendgerät zu veranlassen, eine Aufzeichnungsanwendung zu starten, um eine Aufzeichnungsoperation in Übereinstimmung mit dem Befehl zum Erhalten von Multimedia-Informationen auszuführen, in einem Fall, dass das Ausführungsendgerät gegenwärtig in die SNS-Anwendung eingeloggt ist, oder sich in die SNS-Anwendung unter Verwendung der Kontoinformationen einzuloggen und dann eine Aufzeichnungsanwendung zu starten, um eine Aufzeichnungsoperation in Übereinstimmung mit dem Befehl zum Erhalten von Multimedia-Informationen auszuführen, in einem Fall, dass das Ausführungsendgerät gegenwärtig nicht in die SNS-Anwendung eingeloggt ist,
Empfangen (S409), durch das Befehlsendgerät, von Multimedia-Informationen, die durch das Ausführungsendgerät aufgezeichnet werden,
Einfügen (S413), durch das Befehlsendgerät, der Multimedia-Informationen in den Editierbereich der SNS-Anwendung; und
Veröffentlichen, durch das Befehlsendgerät, von editierten Informationen, die die Multimedia-Informationen in dem Editierbereich der SNS-Anwendung beinhalten, um eine Interaktion und ein gemeinsames Benutzen mit anderen Benutzern zu erreichen.

2. Verfahren zum Editieren von Informationen einer SNS-Anwendung nach Anspruch 1, wobei das Empfangen (S409), durch das Befehlsendgerät, von Multimedia-Informationen, die von dem Ausführungsendgerät aufgezeichnet werden, umfasst:
Empfangen, durch das Befehlsendgerät, von Segmenten von Videoinformationen, die von dem Ausführungsendgerät aufgezeichnet werden, direkt über ein lokales Netzwerk, Bluetooth oder eine Nahfeldkommunikation, um vollständige Multimedia-Informationen zu erzeugen, wobei die aufgezeichneten Videoinformationen durch das Ausführungsendgerät in mehrere Segmente aufgeteilt werden und jedes Segment der Videoinformationen separat an das Befehlsendgerät gesendet wird,
Kombinieren (S412), durch das Befehlsendgerät, der Segmente der Videoinformationen auf den Empfang einer Benachrichtigung, dass der Aufzeichnungsvorgang abgeschlossen ist, von dem Ausführungsendgerät, hin, um vollständige Multimedia-Informationen zu erzeugen.

3. Verfahren zum Editieren von Informationen einer SNS-Anwendung nach Anspruch 1, wobei, nachdem der Server die Identifikationen der Endgeräte an das Befehlsendgerät zurückgibt, die Identifikationen der Endgeräte zur Verwendung beim nächsten Mal lokal gespeichert werden.

4. Verfahren zum Editieren von Informationen einer Anwendung eines sozialen Netzwerk-Dienstes ("SNS"), wobei die SNS-Anwendung eine Anwendung ist, die ein Benutzer verwenden kann, um Informationen zu editieren und solche editierten Informationen zu veröffentlichen, wodurch eine Interaktion und eine gemeinsame Benutzung mit anderen Benutzern erreicht wird, wobei das Verfahren umfasst:
Empfangen, durch ein Ausführungsendgerät, auf dem die SNS-Anwendung unter Verwendung von Kontoinformationen angemeldet ist oder angemeldet wurde, eines Befehls zum Erhalten von Multimedia-Informationen von einem Befehlsendgerät, wobei das Ausführungsendgerät durch das Befehlsendgerät bestimmt wird, das eine Suchanfrage an einen Server sendet, um nach dem Ausführungsendgerät zu suchen, wobei die Suchanfrage eine Identifikation der SNS-Anwendung und der mit ihr verbundenen Kontoinformationen umfasst, wodurch der Server in die Lage versetzt wird, Endgeräte zu suchen, an denen die SNS-Anwendung unter Verwendung derselben Kontoinformationen wie das Befehlsendgerät angemeldet ist oder angemeldet wurde, und Identifikationen der Endgeräte zurückzugeben, durch ein Empfangen der Identifikationen der Endgeräte von dem Server, und durch ein Auswählen mindestens eines Endgeräts als das Ausführungsendgerät auf der Grundlage der Identifikationen der Endgeräte, die von dem Server empfangenen wurden, wobei sich das ausgewählte Endgerät von dem Endgerät unterscheidet, von dem die Suchanfrage gesendet wird, und das ausgewählte Endgerät das Ausführungsendgerät ist, das
den Befehl zum Erhalten von Multimedia-Informationen empfängt,
Starten (S406), durch das Ausführungsendgerät, einer Aufzeichnungsanwendung in dem Ausführungsendgerät, um eine Aufzeichnungsoperation in Übereinstimmung mit dem Befehl zum Erhalten von Multimedia-Informationen in einem Fall auszuführen, dass das Ausführungsendgerät gegenwärtig in die SNS-Anwendung eingeloggt ist, oder Einloggen in die SNS-Anwendung unter Verwendung der Kontoinformationen und dann Starten der Aufzeichnungsanwendung, um die Aufzeichnungsoperation in Übereinstimmung mit dem Befehl zum Erhalten von Multimedia-Informationen in einem Fall auszuführen, dass das Ausführungsendgerät gegenwärtig nicht in die SNS-Anwendung eingeloggt ist;
Senden (S408), durch das Ausführungsendgerät an das Befehlsendgerät, von Multimedia-Informationen, die durch den Aufzeichnungsvorgang erhalten wurden, wodurch das Befehlsendgerät in die Lage versetzt wird, die Multimedia-Informationen in einen Editierbereich der SNS-Anwendung einzufügen und editierte Informationen, die die Multimedia-Informationen in dem Editierbereich der SNS-Anwendung beinhalten, zu veröffentlichen, um eine Interaktion und ein gemeinsames Benutzen mit anderen Benutzern zu erreichen.

5. Verfahren zum Editieren von Informationen einer SNS-Anwendung nach Anspruch 4, wobei das Senden (S408), durch das Ausführungsendgerät an das Befehlsendgerät, von Multimedia-Informationen, die durch den Aufzeichnungsvorgang erhalten wurden, umfasst:
Senden, durch das Ausführungsendgerät an das Befehlsendgerät direkt über ein lokales Netzwerk, Bluetooth oder eine Nahfeldkommunikation, von Segmenten der Videoinformationen separat und einer Benachrichtigung, dass der Aufzeichnungsvorgang abgeschlossen ist, wobei die Segmente der Videoinformationen durch das Befehlsendgerät kombiniert werden (S412), um vollständige Multimedia-Informationen zu erzeugen.

6. Befehlsendgerät, auf dem eine Anwendung eines sozialen Netzwerk-Dienstes ("SNS") unter Verwendung von Kontoinformationen angemeldet ist, wobei die SNS-Anwendung eine Anwendung ist, die ein Benutzer verwenden kann, um Informationen zu editieren und solche editierten Informationen zu veröffentlichen, wodurch eine Interaktion und eine gemeinsame Benutzung mit anderen Benutzern erreicht wird, wobei das Befehlsendgerät umfasst:
ein Befehlsmodul, das:
ausgebildet ist, eine Suchanforderung an einen Server zu senden (S401), um nach dem Ausführungsendgerät zu suchen, während das Befehlsendgerät einen Editiervorgang in einem Editierbereich der SNS-Anwendung ausführt, wobei die Suchanforderung eine Identifikation der SNS-Anwendung und die mit ihr verbundenen Kontoinformationen umfasst, wodurch der Server in die Lage versetzt wird, Endgeräte zu suchen, auf denen die SNS-Anwendung unter Verwendung der gleichen Kontoinformationen wie das Befehlsendgerät angemeldet ist oder angemeldet wurde, und Identifikationen der Endgeräte zurückzugeben,
ausgebildet ist, von dem Server die Identifikationen der Endgeräte zu empfangen,
ausgebildet ist, mindestens ein Endgerät als das Ausführungsendgerät auf der Grundlage der Identifikationen der Endgeräte, die von dem Server empfangen wurden, auszuwählen (S404), wobei sich das ausgewählte Endgerät von dem Endgerät unterscheidet, von dem die Suchanfrage gesendet wird, und
ausgebildet ist, einen Befehl zum Erhalten von Multimedia-Informationen an das Ausführungsendgerät, das mit dem Befehlsendgerät verbunden ist, zu senden (S405), um das Ausführungsendgerät zu veranlassen, eine Aufzeichnungsanwendung zu starten, um einen Aufzeichnungsvorgang in Übereinstimmung mit dem Befehl zum Erhalten von Multimedia-Informationen auszuführen, in einem Fall, dass das Ausführungsendgerät gegenwärtig in die SNS-Anwendung eingeloggt ist, oder sich in die SNS-Anwendung unter Verwendung der Kontoinformationen einzuloggen und dann eine Aufzeichnungsanwendung zu starten, um einen Aufzeichnungsvorgang in Übereinstimmung mit dem Befehl zum Erhalten von Multimedia-Informationen auszuführen, in einem Fall, dass das Ausführungsendgerät gegenwärtig nicht in die SNS-Anwendung eingeloggt ist,
ein Informationsübertragungsmodul, das ausgebildet ist, Multimedia-Informationen, die von dem Ausführungsendgerät aufgezeichnet wurden, zu empfangen (S409), und
ein Editiermodul, das ausgebildet ist, die Multimedia-Informationen in den Editierbereich der SNS-Anwendung einzufügen (S413) und editierte Informationen, die die Multimedia-Informationen in dem Editierbereich der SNS-Anwendung beinhalten, zu veröffentlichen, um eine Interaktion und ein gemeinsames Benutzen mit anderen Benutzern zu ermöglichen.

7. Befehlsendgerät nach Anspruch 6, wobei das Informationsübertragungsmodul des Weiteren ausgebildet ist, um:
Segmente von Videoinformationen, die von dem Ausführungsendgerät aufgezeichnet werden, direkt über ein lokales Netzwerk, Bluetooth oder eine Nahfeldkommunikation zu empfangen, um vollständige Multimedia-Informationen zu erzeugen, wobei die aufgezeichneten Videoinformationen durch das Ausführungsendgerät in mehrere Segmente unterteilt werden und jedes Segment der Videoinformationen separat an das Befehlsendgerät gesendet wird,
Kombinieren (S412) der Segmente der Videoinformationen auf den Empfang einer Benachrichtigung, dass der Aufzeichnungsvorgang abgeschlossen ist, von dem Ausführungsendgerät, hin, um vollständige Multimedia-Informationen zu erzeugen.

8. Befehlsendgerät nach Anspruch 6, wobei nach der Rückgabe der Identifikationen der Endgeräte durch den Server an das Befehlsendgerät das Befehlsendgerät angepasst ist, die Identifikationen der Endgeräte zur Verwendung beim nächsten Mal lokal zu speichern.

9. Ausführungsendgerät, auf dem eine Anwendung eines sozialen Netzwerk-Dienstes ("SNS") unter Verwendung von Kontoinformationen angemeldet ist oder angemeldet wurde, wobei die SNS-Anwendung eine Anwendung ist, die ein Benutzer verwenden kann, um Informationen zu editieren und solche editierten Informationen zu veröffentlichen, wodurch eine Interaktion und ein gemeinsames Benutzen mit anderen Benutzern erreicht wird, wobei das Ausführungsendgerät umfasst:
ein Befehlsempfangsmodul, das ausgebildet ist, einen Befehl zum Erhalten von Multimedia-Informationen von einem Befehlsendgerät, an dem die SNS-Anwendung unter Verwendung der Kontoinformationen angemeldet ist, zu empfangen, wobei das Ausführungsendgerät durch das Befehlsendgerät bestimmt wird, das eine Suchanfrage an einen Server sendet, um nach dem Ausführungsendgerät zu suchen, wobei die Suchanfrage eine Identifikation der SNS-Anwendung und die mit der SNS-Anwendung verbundenen Kontoinformationen umfasst, wodurch der Server in die Lage versetzt wird, Endgeräte zu suchen, an denen die SNS-Anwendung unter Verwendung derselben Kontoinformationen wie das Befehlsendgerät angemeldet ist oder angemeldet wurde, und Identifikationen der Endgeräte zurückzugeben, durch ein Empfangen der Identifikationen der Endgeräte von dem Server, und durch ein Auswählen mindestens eines Endgeräts als das Ausführungsendgerät auf der Grundlage der Identifikationen der Endgeräte, die von dem Server empfangenen wurden, wobei sich das ausgewählte Endgerät von dem Endgerät unterscheidet, von dem die Suchanfrage gesendet wird, und das ausgewählte Endgerät das Ausführungsendgerät ist, das
ausgebildet ist, den Befehl zum Erhalten von Multimedia-Informationen zu empfangen, und
ein Ausführungsmodul, das ausgebildet ist, Multimedia-Informationen in Übereinstimmung mit dem Befehl zum Erhalten von Multimedia-Informationen in einem Fall zu erhalten, dass das Ausführungsendgerät gegenwärtig in die SNS-Anwendung eingeloggt ist, oder ausgebildet ist, sich in die SNS-Anwendung unter Verwendung der Kontoinformationen einzuloggen und dann ausgebildet ist, die Aufzeichnungsanwendung zu starten (S406), um den Aufzeichnungsvorgang in Übereinstimmung mit dem Befehl zum Erhalten von Multimedia-Informationen auszuführen, in einem Fall, dass das Ausführungsendgerät gegenwärtig nicht in die SNS-Anwendung eingeloggt ist, und ausgebildet ist, durch den Aufzeichnungsvorgang erhaltene Multimedia-Informationen an das Befehlsendgerät zu senden (S408), wodurch das Befehlsendgerät in die Lage versetzt wird, die Multimedia-Informationen in einen Editierbereich der SNS-Anwendung einzufügen, und ausgebildet ist, editierte Informationen, die die Multimedia-Informationen in dem Editierbereich der SNS-Anwendung beinhalten, zu veröffentlichen, um eine Interaktion und eine gemeinsame Benutzung mit anderen Benutzern zu erreichen.

10. Ausführungsendgerät nach Anspruch 9, wobei das Ausführungsmodul des Weiteren ausgebildet ist, um
Segmente der Videoinformationen separat und eine Benachrichtigung, dass der Aufnahmevorgang abgeschlossen ist, direkt über ein lokales Netzwerk, Bluetooth oder eine Nahfeldkommunikation an das Befehlsendgerät zu senden, wobei die Segmente der Videoinformationen durch das Befehlsendgerät kombiniert werden, um vollständige Multimedia-Informationen zu erzeugen.

## Revendications

1. Procédé d'édition d'informations d'application de service de réseau social ("SNS"), dans lequel l'application SNS est une application qu'un utilisateur peut utiliser pour éditer des informations et pour publier de telles informations éditées, réalisant ainsi une interaction et un partage avec d'autres utilisateurs, dans lequel le procédé comprend:
envoyer (S401), par un terminal de commande sur lequel l'application SNS est connectée en utilisant des informations de compte, une demande de recherche à un serveur pour rechercher un terminal d'exécution pendant que le terminal de commande exécute une opération d'édition dans une zone d'édition de l'application SNS, dans lequel la demande de recherche comprend une identification de et les informations de compte associées à l'application SNS, permettant au serveur de rechercher des terminaux sur lesquels l'application SNS est ou a été connectée en utilisant les mêmes informations de compte que le terminal de commande, et de renvoyer des identifications des terminaux,
recevoir, par le terminal de commande, en provenance du serveur, les identifications des terminaux,
sélectionner (S404), par le terminal de commande, au moins un terminal en tant que terminal d'exécution sur la base des identifications des terminaux reçues du serveur, dans lequel le terminal sélectionné est différent du terminal à partir duquel la demande de recherche est envoyée,
envoyer (S405), par le terminal de commande, une commande d'obtention d'informations multimédias au terminal d'exécution pour amener le terminal d'exécution à démarrer une application d'enregistrement pour exécuter une opération d'enregistrement conformément à la commande d'obtention d'informations multimédias dans un cas où le terminal d'exécution s'est connecté actuellement à l'application SNS, ou de se connecter à l'application SNS en utilisant les informations de compte et puis de démarrer une application d'enregistrement pour exécuter une opération d'enregistrement conformément à la commande d'obtention d'informations multimédias dans le cas où le terminal d'exécution ne s'est pas connecté actuellement à l'application SNS,
recevoir (S409), par le terminal de commande, des informations multimédias qui sont enregistrées par le terminal d'exécution,
insérer (S413), par le terminal de commande, les informations multimédias dans la zone d'édition de l'application SNS; et
publier, par le terminal de commande, des informations éditées comprenant les informations multimédias dans la zone d'édition de l'application SNS, pour réaliser une interaction et un partage avec d'autres utilisateurs.

2. Procédé d'édition d'informations d'application SNS selon la revendication 1, dans lequel la réception (S409), par le terminal de commande, d'informations multimédias qui sont enregistrées par le terminal d'exécution comprend:
recevoir, par le terminal de commande, des segments d'informations vidéo qui sont enregistrées par le terminal d'exécution, directement via un réseau local, Bluetooth ou une communication en champ proche, pour générer des informations multimédias complètes, dans lequel les informations vidéo enregistrées sont décomposées en plusieurs segments par le terminal d'exécution et chaque segment des informations vidéo est envoyé séparément au terminal de commande,
combiner (S412), par le terminal de commande, les segments des informations vidéo lors de la réception d'une notification indiquant que l'opération d'enregistrement est terminée et provenant du terminal d'exécution, pour générer des informations multimédias complètes.

3. Procédé d'édition d'informations d'application SNS selon la revendication 1, dans lequel, après que le serveur retourne les identifications des terminaux au terminal de commande, les identifications des terminaux sont stockées localement pour les utiliser la prochaine fois.

4. Procédé d'édition d'informations d'application de service de réseau social ("SNS"), dans lequel l'application SNS est une application qu'un utilisateur peut utiliser pour éditer des informations et pour publier de telles informations éditées, réalisant ainsi une interaction et un partage avec d'autres utilisateurs, dans lequel le procédé comprend:
recevoir, par un terminal d'exécution sur lequel l'application SNS est ou a été connectée en utilisant des informations de compte, une commande d'obtention d'informations multimédias à partir d'un terminal de commande, dans lequel le terminal d'exécution est déterminé par le terminal de commande envoyant une demande de recherche à un serveur pour rechercher le terminal d'exécution, dans lequel la demande de recherche comprend une identification de l'application SNS et les informations de compte associées à l'application SNS, permettant au serveur de rechercher des terminaux sur lesquels l'application SNS est ou a été connectée en utilisant les mêmes informations de compte que le terminal de commande, et de renvoyer des identifications des terminaux, en recevant du serveur les identifications des terminaux, et en sélectionnant au moins un terminal en tant que terminal d'exécution sur la base des identifications des terminaux reçues du serveur, dans lequel le terminal sélectionné est différent du terminal à partir duquel la demande de recherche est envoyée, et le terminal sélectionné est le terminal d'exécution qui
reçoit la commande d'obtention d'informations multimédias,
démarrer (S406), par le terminal d'exécution, une application d'enregistrement dans le terminal d'exécution pour exécuter une opération d'enregistrement conformément à la commande d'obtention d'informations multimédias dans un cas où le terminal d'exécution est actuellement connecté à l'application SNS, ou se connecter à l'application SNS en utilisant les informations de compte et puis démarrer l'application d'enregistrement pour exécuter l'opération d'enregistrement conformément à la commande d'obtention d'informations multimédias dans un cas où le terminal d'exécution ne s'est pas connecté actuellement à l'application SNS;
envoyer (S408), par le terminal d'exécution au terminal de commande, des informations multimédias obtenues par l'opération d'enregistrement, permettant au terminal de commande d'insérer les informations multimédias dans une zone d'édition de l'application SNS et de publier des informations éditées comprenant les informations multimédias dans la zone d'édition de l'application SNS pour réaliser une interaction et un partage avec d'autres utilisateurs.

5. Procédé d'édition d'informations d'application SNS selon la revendication 4, dans lequel l'envoi (S408), par le terminal d'exécution au terminal de commande, d'informations multimédias obtenues par l'opération d'enregistrement comprend:
envoyer, par le terminal d'exécution au terminal de commande, directement via un réseau local, Bluetooth ou une communication en champ proche, des segments des informations vidéo séparément et une notification indiquant que l'opération d'enregistrement est terminée, dans lequel les segments des informations vidéo sont combinés (S412) par le terminal de commande pour générer des informations multimédias complètes.

6. Terminal de commande sur lequel une application de service de réseau social ("SNS") est connectée en utilisant des informations de compte, dans lequel l'application SNS est une application qu'un utilisateur peut utiliser pour éditer des informations et pour publier de telles informations éditées, réalisant ainsi une interaction et un partage avec d'autres utilisateurs, dans lequel le terminal de commande comprend:
un module de commande qui:
est configuré pour envoyer (S401) une demande de recherche à un serveur pour rechercher le terminal d'exécution pendant que le terminal de commande exécute une opération d'édition dans une zone d'édition de l'application SNS, dans lequel la demande de recherche comprend une identification de et les informations de compte associées à l'application SNS, permettant au serveur de rechercher des terminaux sur lesquels l'application SNS est ou a été connectée en utilisant les mêmes informations de compte que le terminal de commande, et de renvoyer des identifications des terminaux,
est configuré pour recevoir du serveur les identifications des terminaux,
est configuré pour sélectionner (S404) au moins un terminal en tant que terminal d'exécution sur la base des identifications des terminaux reçues du serveur, dans lequel le terminal sélectionné est différent du terminal à partir duquel la demande de recherche est envoyée, et
est configuré pour envoyer (S405) une commande d'obtention d'informations multimédias au terminal d'exécution associé au terminal de commande pour amener le terminal d'exécution à démarrer une application d'enregistrement pour exécuter une opération d'enregistrement conformément à la commande d'obtention d'informations multimédias dans un cas où le terminal d'exécution s'est connecté actuellement à l'application SNS, ou de se connecter à l'application SNS en utilisant les informations de compte et puis de démarrer une application d'enregistrement pour exécuter une opération d'enregistrement conformément à la commande d'obtention d'informations multimédias dans un cas où le terminal d'exécution ne s'est pas connecté actuellement à l'application SNS,
un module de transmission d'informations qui est configuré pour recevoir (S409) des informations multimédias qui sont enregistrées par le terminal d'exécution, et
un module d'édition qui est configuré pour insérer (S413) les informations multimédias dans la zone d'édition de l'application SNS et est configuré pour publier des informations éditées comprenant les informations multimédias dans la zone d'édition de l'application SNS, pour réaliser une interaction et un partage avec d'autres utilisateurs.

7. Terminal de commande selon la revendication 6, dans lequel le module de transmission d'informations est en outre configuré pour:
recevoir des segments d'informations vidéo qui sont enregistrées par le terminal d'exécution, directement via un réseau local, Bluetooth ou une communication en champ proche, pour générer des informations multimédias complètes, dans lequel les informations vidéo enregistrées sont décomposées en plusieurs segments par le terminal d'exécution et chaque segment des informations vidéo est envoyé séparément au terminal de commande,
combiner (S412) les segments des informations vidéo lors de la réception d'une notification indiquant que l'opération d'enregistrement est terminée et provenant du terminal d'exécution, pour générer des informations multimédias complètes.

8. Terminal de commande selon la revendication 6, dans lequel après le retour des identifications des terminaux par le serveur au terminal de commande, le terminal de commande est adapté à stocker localement les identifications des terminaux pour les utiliser la prochaine fois.

9. Terminal d'exécution sur lequel une application de service de réseau social ("SNS") est ou a été connectée en utilisant des informations de compte, dans lequel l'application SNS est une application qu'un utilisateur peut utiliser pour éditer des informations et pour publier de telles informations éditées, réalisant ainsi une interaction et un partage avec d'autres utilisateurs, dans lequel le terminal d'exécution comprend:
un module de réception de commande qui est configuré pour recevoir une commande d'obtention d'informations multimédias à partir d'un terminal de commande sur lequel l'application SNS est connectée en utilisant des informations de compte, dans lequel le terminal d'exécution est déterminé par le terminal de commande envoyant une demande de recherche à un serveur pour rechercher le terminal d'exécution, dans lequel la demande de recherche comprend une identification de l'application SNS et les informations de compte associées à l'application SNS, permettant au serveur de rechercher des terminaux sur lesquels l'application SNS est ou a été connectée en utilisant les mêmes informations de compte que le terminal de commande, et de renvoyer des identifications des terminaux, en recevant du serveur les identifications des terminaux, et en sélectionnant au moins un terminal en tant que terminal d'exécution sur la base des identifications des terminaux reçues du serveur, dans lequel le terminal sélectionné est différent du terminal à partir duquel la demande de recherche est envoyée, et le terminal sélectionné est le terminal d'exécution qui
est configuré pour recevoir la commande d'obtention d'informations multimédias, et
un module d'exécution qui est configuré pour obtenir des informations multimédias conformément à la commande d'obtention d'informations multimédias dans un cas où le terminal d'exécution s'est actuellement connecté à l'application SNS, ou est configuré pour se connecter à l'application SNS en utilisant les informations de compte et puis est configuré pour démarrer (S406) l'application d'enregistrement pour exécuter l'opération d'enregistrement conformément à la commande d'obtention d'informations multimédias dans un cas où le terminal d'exécution n'est actuellement pas connecté à l'application SNS, et est configuré pour envoyer (S408) des informations multimédias obtenues par l'opération d'enregistrement au terminal de commande, permettant au terminal de commande d'insérer les informations multimédias dans une zone d'édition de l'application SNS et est configuré pour publier des informations éditées comprenant les informations multimédias dans la zone d'édition de l'application SNS pour réaliser une interaction et un partage avec d'autres utilisateurs.

10. Terminal d'exécution selon la revendication 9, dans lequel le module d'exécution est en outre configuré pour:
envoyer, au terminal de commande, directement via un réseau local, Bluetooth ou une communication en champ proche, des segments des informations vidéo séparément et une notification indiquant que l'opération d'enregistrement est terminée, dans lequel les segments des informations vidéo sont combinés par le terminal de commande pour générer des informations multimédias complètes.
